# EUROPÄISCHE PATENTSCHRIFT

(11) **EP 3 309 590 B1**
(45) Veröffentlichungstag und Bekanntmachung des Hinweises auf die Patenterteilung: **24.02.2021**
(21) Anmeldenummer: 16193784.2
(22) Anmeldetag: 13.10.2016
(51) Int. Cl.: G01T 1/17, G01F 1/00, G01T 7/00

(54) **RADIOMETRISCHES MESSGERAET ZUR ERFASSUNG EINES AMPLITUDENSPEKTRUMS IM ZWEILEITERBETRIEB**
RADIOMETRIC METER FOR DETERMINING AN AMPLITUDE SPECTRUM IN TWO LINE OPERATION
APPAREIL DE MESURE RADIOMÉTRIQUE POUR LA COLLECTE D'UN SPECTRE D'AMPLITUDES EN FONCTIONNEMENT À DEUX FILS

(43) Veröffentlichungstag der Anmeldung: 18.04.2018
(73) Patentinhaber: VEGA Grieshaber KG, 77709 Wolfach (DE)
(72) Erfinder: KÖRNLE, Ralf, 77736 Zell a.H. (DE)
(74) Vertreter: Maiwald Patent- und Rechtsanwaltsgesellschaft mbH

(56) Entgegenhaltungen:
- WO-A1-2010/138574
- WO-A2-2014/045223
- DE-U1-202015 103 673
- US-B1- 6 335 958

## Beschreibung

### Gebiet der Erfindung

Die Erfindung betrifft die radiometrische Füllstandmessung, die radiometrische Grenzstandmessung und die radiometrische Durchsatzmessung. Insbesondere betrifft die Erfindung ein radiometrisches Messgerät mit einer Verzögerungsschaltung, ein Verfahren zum Messen eines Füllstands, eines Grenzstands und/oder eines Durchsatzes mit einem radiometrischen Messgerät, ein Programmelement und ein computerlesbares Medium.

### Hintergrund

Bei der radiometrischen Füllstand-, Grenzstand-, Dichte- oder Durchsatzmessung werden die von einem radioaktiven Strahler ausgesendeten und durch das Füllgut gelangenden radioaktiven Strahlen detektiert und in elektrische Pulse umgewandelt. Zur Detektion der radioaktiven Strahlung kann ein Szintillator vorgesehen sein, der daraus Lichtpulse erzeugt, die von einem nachgeschalteten Detektor, beispielsweise in Form eines Photomultipliers (PMT), einer Avanlanche-Photodiode (APD) oder eines Silizium-Photomultipliers (SiPM), in elektrische Pulse umgewandelt werden.

Alternativ kann ein Geiger-Müller-Zähler vorgesehen sein. Diese Signale werden dann von einer Auswerteschaltung ausgewertet, um den Füllstand, den Grenzstand, die Dichte oder den Durchsatz zu bestimmen.

Zur Ermittlung eines Meßwerts reicht es, die Pulsrate zu bestimmen. Dazu werden die elektrischen Pulse einem Diskriminator zugeführt, mit dessen Hilfe die Pulse ab einer bestimmten Größe erkannt und gezählt werden können. Ein solcher Diskriminator kann als Komparator mit festem oder einstellbarem Triggerlevel ausgeführt sein. Zur Kompensation von Temperatur- und Alterungseffekten ist es oftmals sinnvoll, einen oder mehrere weitere Diskriminatoren mit unterschiedlicher Schaltschwelle dem ersten Diskriminator parallel zu schalten. Mittels Verhältnisbildung aus den verschiedenen Zählraten kann eine Regelung realisiert werden.

Statt der Verwendung eines oder mehrerer Diskriminatoren kann eine Messung der Pulsamplituden vorgenommen werden. Die Analyse des Pulsamplitudenspektrums kann zur Regelung und Meßwertbildung herangezogen werden. Dies kann beispielsweise durch Analog-Digital-Wandlung und Abspeicherung der Werte mit einem Microcontroller erfolgen. Dieser berechnet kann dann auch die Regelgrößen und/oder den Meßwert berechnen.

Messgeräte mit einer solchen Schaltungsanordnung weisen einen signifikanten Energiebedarf auf.

WO 2010/138574 A1 beschreibt einen Computertomographen für medizinische Anwendungen oder zur Inspektion von Gepäckstücken mit einer Vielzahl an einzelnen Detektorelementen.

US 6,335,958 B1 beschreibt ein Tomodensitometer mit einer Röntgenquelle und einem Detektorarray.

DE 20 2015 103 673 U1 beschreibt ein radiometrisches Messsystem zur Bestimmung eines Füllstands, eines Grenzstands, einer Dichte oder eines Durchflusses. Es ist ein Speicher zum Speichern der vom Analog-Digital-Wandler digitalisierten Werte vorgesehen. Eine Auswerteeinheit ist zur Auswahl von im Speicher gespeicherten digitalisierten Werten und zum Vergleich der ausgewählten digitalisierten Werte mit ebenfalls im Speicher gespeicherten Referenzwerten ausgeführt, um durch diesen Vergleich zu entscheiden, ob die ausgewählten digitalisierten Werte zur Bestimmung des Füllstands, des Grenzstands, der Dichte oder des Durchflusses heranzuziehen oder zu verwerfen sind.

### Zusammenfassung der Erfindung

Es ist eine Aufgabe der Erfindung, den Energiebedarf eines radiometrischen Messgeräts zu verringern.

Diese Aufgabe wird durch die Gegenstände der unabhängigen Patentansprüche gelöst. Weiterbildungen der Erfindung ergeben sich aus den Unteransprüchen und der folgenden Beschreibung.

Ein erster Aspekt der Erfindung betrifft ein radiometrisches Messgerät, welches eine Detektoranordnung, einen Integrator, eine Verzögerungsschaltung und eine Steuerschaltung aufweist.

Die Detektoranordnung ist ausgeführt, die von einer Quelle ausgesendete radioaktive Strahlung, welche durch das zu vermessende Medium hindurchtritt, in ein pulsartiges elektrisches Stromsignal umzuwandeln. Der Integrator bzw. die Integratorschaltung ist ausgeführt, dieses elektrische Stromsignal zu integrieren, was zu einem Aufladen zumindest eines Bauteils des Integrators führt. Bei dem zumindest einen Bauteil handelt es sich beispielsweise um einen Kondensator.

Mithilfe der Verzögerungsschaltung kann die Entladung des mindestens einen Bauteils des Integrators wahlweise verzögert oder beschleunigt werden.

Die Steuerschaltung ist ausgeführt zur Analyse des integrierten elektrischen Stromsignals, während die Entladung des zumindest einen Bauteils des Integrators verzögert ist, um daraus letztendlich einen Füllstand, einen Grenzstand oder einen Durchsatz zu bestimmen. Zusätzlich kann die Steuerschaltung ausgeführt sein, aus der Analyse des integrierten elektrischen Stromsignals eine andere Messgröße zu bestimmen. Das hier und im Folgenden beschriebene Grundkonzept ist jedoch insbesondere für diese Anwendungen vorteilhaft, insbesondere, wenn die für die Messung zur Verfügung stehende Energie limitiert ist.

Die Verzögerungsschaltung weist in einer Ausführungsform einen ersten Schalter und eine Bypassleitung auf. Dieser Schalter ist beim Aufladen des mindestens einen Bauteils geöffnet, sodass ein schnelles Entladen des Bauteils verhindert wird. Ist der Schalter geschlossen, fließt die darin gespeicherte elektrische Ladung verhältnismäßig schnell von dem mindestens einen Bauteil ab, sodass das Messgerät möglichst schnell für eine weitere Messung bereitsteht.

Durch die Verzögerungsschaltung kann dieser Entladevorgang deutlich verzögert werden, nämlich wenn der Schalter geöffnet ist, sodass die Auswertung des im Integrator gespeicherten pulsartigen elektrischen Stromsignals auch längere Zeit in Anspruch nehmen kann. Somit werden nicht allzu hohe Anforderungen an die Geschwindigkeit der Steuerschaltung bei der Analyse des integrierten elektrischen Stromsignals gestellt, was letztendlich Kosten und Energie spart.

Aufgabe des Integrators ist es, das pulsartige elektrische Stromsignal zu "integrieren". Im Kontext der Erfindung bedeutet das beispielsweise, dass elektrische Ladung auf einem oder mehreren Kondensatoren gespeichert wird, deren Menge mit der Größe des pulsartigen Stromsignals korrespondiert. Vor diesem Ladungsspeicher kann ein Verstärker angeordnet sein, beispielsweise in Form eines Operationsverstärkers, der ein Spannungssignal ausgibt, das dann an dem Kondensator anliegt. Nach der erfolgten Speicherung der entsprechenden Ladung im Kondensator kann die daran anliegende Spannung von der Steuerschaltung gemessen und analysiert werden.

Auf diese Weise können Pulse und die damit zusammenhängenden Amplitudenspektren erfasst und ausgewertet werden.

Gemäß einer Ausführungsform der Erfindung besteht der Integrator aus einem ersten Kondensator oder weist zumindest einen ersten Kondensator auf. Insbesondere im erstgenannten Fall kann vorgesehen sein, dass vor dem Integrator ein zweiter Schalter vorgesehen ist und von der Steuerschaltung angesteuert werden kann, um die Aufladung des bzw. der Bauteile des Integrators, die den Strompuls aufintegrieren, zu beenden. Der Schalter kann dann geöffnet werden, wenn gerade ein Puls erfasst und integriert wurde. Ggf. wird der Schalter auch erst dann geöffnet, wenn ein Puls mit ausreichend hoher Amplitude erfasst und integriert wurde. Auf diese Weise ist es möglich, Pulse mit zu geringen Amplituden zu vernachlässigen, also bei der Analyse nicht zu berücksichtigen. Es kann auch vorgesehen sein, daß der Schalter für eine bestimmte Zeit geschlossen bleibt und alle während dieses Zeitraums eintreffenden Pulse aufintegriert werden. Es kann auch vorgesehen sein, daß der Schalter solange geschlossen bleibt, bis die Spannung am Integrator einen bestimmten Wert erreicht hat. Zur Meßwertbildung wird dann die verstrichene Zeitspanne herangezogen.

Gemäß einer weiteren Ausführungsform der Erfindung weist der Integrator neben dem ersten Kondensator einen dazu parallel geschalteten Widerstand auf, sodass ein RC-Glied ausgebildet wird, was als Filter fungiert. Darüber hinaus kann eine Verstärkerschaltung vorgesehen sein, die beispielsweise einen Operationsverstärker und hinter dessen Ausgang einen Schalter oder eine Diode aufweist, um zu verhindern, dass Strom vom Speicherkondensator zurück zum Verstärker fließt. Hinter dieser Diode bzw. dem Schalter befindet sich ein zweiter Kondensator (der Speicherkondensator). Dieser Kondensator weist typischerweise eine höhere Kapazität auf, als der erste Kondensator des RC-Glieds. Beispielsweise ist seine Kapazität hundertmal größer.

Gemäß einer Ausführungsform der Erfindung weist die Verstärkerschaltung einen Operationsverstärker auf, der als Spitzenwertgleichrichter geschaltet ist. Der Operationsverstärker ist Teil des Integators. Die Geschwindgkeit des Operationsverstärkers muß aus diesem Grund hoch genug für die Verarbeitung der Pulse sein. Bei einer Pulslänge von 10 Nanosekunden, wie sie beispielsweise bei Verwendung eines Photomultipliers mit einem Kunststoffszintillator auftritt, muß die Anstiegsgeschwindigkeit mindestens 300 Volt/Mikrosekunde betragen.

Gemäß einer weiteren Ausführungsform der Erfindung weist die Verstärkerschaltung einen Operationsverstärker auf, der als Komparator geschaltet ist. Weil der Operationsverstärker hier nicht Teil des Integrators ist, werden keine besonderen Anforderungen an seine Geschwindigkeit gestellt.

Gemäß einer weiteren Ausführungsform der Erfindung weist die Detektoranordnung einen Szintillator und einen Photomultiplier bzw. Siliziumphotomultiplier auf. Alternativ kann die Detektoranordnung ein Geiger-Müller-Zählrohr aufweisen.

Gemäß einer Ausführungsform der Erfindung ist die Steuerschaltung zum Öffnen des ersten Schalters nach einer voreingestellten Zeitspanne seit dem Schließen des Schalters ausgeführt. Beispielsweise beträgt die voreingestellte Zeitspanne das Zweibis Zehnfache, das Vier- bis Sechsfache oder beispielsweise das Fünffache des Produktes aus der Kapazität des ersten Kondensators und des Widerstands, der die Entladezeit des ersten Kondensators maßgeblich bestimmt. Typischerweise wird sich die voreingestellte Zeitspanne im Bereich von wenigen Mikrosekunden befinden.

Gemäß einer Ausführungsform der Erfindung ist die Steuerschaltung zum Öffnen des ersten Schalters nach Erreichen eines voreingestellten Schwellwerts seit dem Schließen des Schalters ausgeführt. Beispielsweise beträgt der voreingestellte Schwellwert 80% des Meßbereichs des AD-Wandlers. Es wird dann die Zeit bis zum Erreichen des Schwellwerts gemessen. Diese Zeit kann bei mehreren zehn Mikrosekunden liegen, aber auch in der Größenordnung von 1 oder 10 Millisekunden.

Gemäß einer weiteren Ausführungsform der Erfindung ist das radiometrische Messgerät zum Anschluss an eine 4...20 mA Zweileiterschleife ausgeführt, über welche das Messgerät mit der zu seinem Betrieb erforderlichen elektrischen Energie versorgt wird. Über die Zweileiterschleife kann auch die Datenkommunikation mit einem externen Gerät erfolgen.

Gemäß einer weiteren Ausführungsform der Erfindung weist die Detektoranordnung einen Szintillator und einen Siliziumphotomultiplier auf.

Das radiometrisches Messgerät kann zum Durchführen der Integration der pulsartigen elektrischen Stromsignale über einen festen oder einstellbaren Zeitraum und zum Heranziehen der während dieses Zeitraums im Integrator gespeicherten Ladung zur Bildung eines Meßwerts ausgeführt sein. Der Messewert wird also aus einer Vielzahl an aufintegrierten Pulsen berechnet. Es handelt sich demnach um eine Mittelwertbildung.

Beispielsweise werden die Strompulse so lange integriert, bis an dem Integrator ein fester oder einstellbarer Vergleichswert überschritten ist und die ermittelte Dauer dieses Vorgangs zur Bildung eines Meßwerts herangezogen wird.

Ein weiterer Aspekt der Erfindung betrifft ein Verfahren zum Messen eines Füllstands, eines Grenzstands oder eines Durchsatzes mit einem oben und im Folgenden beschriebenen radiometrischen Messgerät. Zunächst erfolgt das Umwandeln von radioaktiver Strahlung in ein pulsartiges elektrisches Stromsignal, welches integriert wird, was zu einem Aufladen eines entsprechenden Bauteils einer Integratorschaltung führt. Die Entladung des Bauteils des Integrators wird hierbei verzögert. Daraufhin erfolgt die Analyse des integrierten Stromsignals (welches ggf. vorher in eine Spannung umgesetzt und verstärkt wurde), während die Entladung des Bauteils des Integrators verzögert ist, um daraus einen Füllstand, Grenzstand oder einen Durchsatz zu bestimmen. Nach dieser Analyse wird ein Schalter geschlossen, um die Entladung des Bauteils des Integrators zu beschleunigen. Sobald der Integrator entladen ist, steht er für die Integration eines weiteren elektrischen pulsartigen Signals und somit für die Detektion eines neuen Pulses bereit.

Ein weiterer Aspekt der Erfindung betrifft ein Programmelement, das, wenn es auf einer Steuerschaltung eines radiometrischen Messgeräts ausgeführt wird, das Messgerät anleitet, die oben und im Folgenden beschriebenen Schritte durchzuführen.

Ein weiterer Aspekt der Erfindung betrifft ein computerlesbares Medium, auf dem ein oben beschriebenes Programmelement gespeichert ist.

Im Folgenden werden Ausführungsbeispiele der Erfindung unter Bezugnahme auf die Figuren beschrieben.

Werden in der folgenden Beschreibung gleiche Bezugszeichen verwendet, so bezeichnen diese gleiche oder ähnliche Elemente.

Die Darstellungen in den Figuren sind schematisch und nicht maßstäblich.

### Kurze Beschreibung der Figuren

Fig. 1 zeigt ein Prinzipschaltbild eines radiometrischen Messgeräts gemäß einem Ausführungsbeispiel der Erfindung.
Fig. 2 zeigt ein Prinzipschaltbild eines radiometrischen Messgeräts gemäß einem weiteren Ausführungsbeispiel der Erfindung.
Fig. 3 zeigt ein Prinzipschaltbild eines radiometrischen Messgeräts gemäß einem weiteren Ausführungsbeispiel der Erfindung.
Fig. 4 zeigt ein Flussdiagramm eines Verfahrens gemäß einem Ausführungsbeispiel der Erfindung.

### Detaillierte Beschreibung von Ausführungsbeispielen

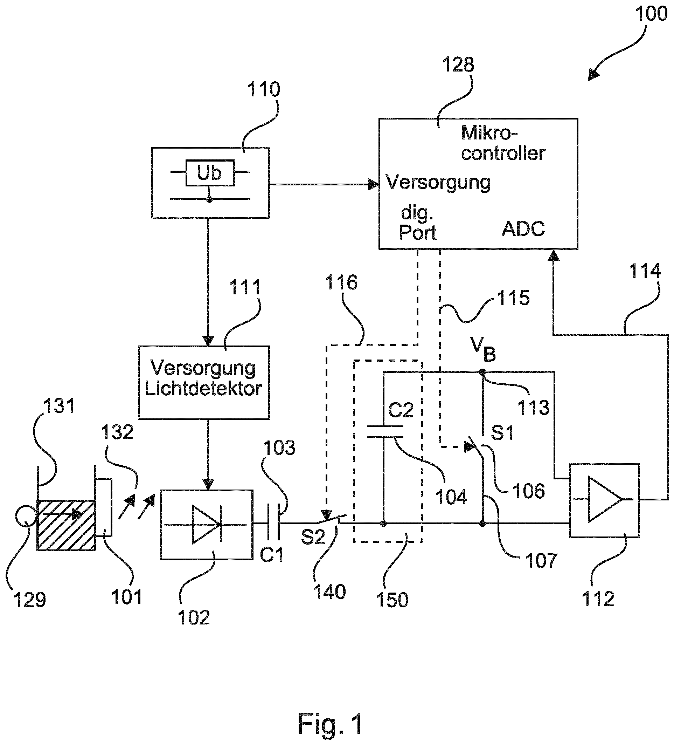

Fig. 1 zeigt ein Prinzipschaltbild eines radiometrischen Messgeräts 100 gemäß einem Ausführungsbeispiel der Erfindung. Es ist ein radioaktiver Strahler 129 vorgesehen, der beispielsweise an der Außenwandung eines Behälters 131 befestigt ist. In dem Behälter ist ein Füllgut enthalten und die radioaktive Strahlung durchdringt den Behälter und ggf. das Füllgut und kann von dem auf der anderen Seite des Behälters angebrachten Szintillator 101 aufgenommen werden.

Der Szintillator 101 wandelt die auf ihn eintreffende radioaktive Strahlung in Lichtblitze 132 um, die von einem Photomultiplier 102 in Strompulse umgewandelt werden können. Anstelle des Photomultipliers können auch ein oder mehrere Photodioden oder ein Silizium-Photomultiplier vorgesehen sein. Alternativ zum Szintillator 101 und Lichtdetektor 102 kann auch ein Geiger-Müller-Zählrohr vorgesehen sein.

Das radiometrische Messgerät 100 ist an eine 4...20 mA Zweileiterschleife angeschlossen. Diese versorgt das Versorgungsspannungsmodul 110 mit elektrischer Energie. Das Versorgungsspannungsmodul 110 versorgt einerseits die Steuerschaltung 128 mit der für ihren Betrieb notwendigen elektrischen Energie und andererseits die Versorgungsschaltung 111 zur Bereitstellung der elektrischen Energie für den Lichtdetektor 102.

Das vom Lichtdetektor 102 erzeugte pulsartige elektrische Stromsignal wird an den Integrator 150 abgegeben. Zwischen dem Integrator 150 und dem Lichtdetektor 102 befindet sich ein Kondensator 103 sowie ein Schalter 140. Dieser Schalter wird über die Steuerleitung 116 von der Steuerschaltung 128 angesteuert und geöffnet, sobald ein Strompuls im Integrator 150 eingegangen ist. Der geöffnete Schalter 140 vermeidet, dass sich der Kondensator 104 frühzeitig entlädt.

Parallel zum Kondensator 104 des Integrators 150 ist eine Bypassleitung 107 mit einem Schalter 106 vorgesehen, der im Grundzustand geöffnet ist, um ein frühzeitiges Entladen des Kondensators 104 zu verhindern. Sind beide Schalter 140, 106 geöffnet und ein Strompuls im Kondensator 104 gespeichert, hat die Steuerschaltung 128 ausreichend Zeit, den Strompuls auszuwerten. An den oberen Zweig 113 ist eine Bezugsspannung V_{B} angelegt.

Des Weiteren kann ein Verstärker 112 vorgesehen sein, welcher das am Kondensator 104 anliegende Signal verstärkt und über die Leitung 114 einem Analog/Digital-Wandler der Steuerschaltung 128 übermittelt. Wird ein solches Signal von der Steuerschaltung, die beispielsweise in Form eines Mikrocontrollers ausgeführt sein kann, detektiert, kann über die Steuerleitung 115 der Schalter 106 geschlossen werden, nachdem der integrierte Strompuls von der Steuerschaltung analysiert wurde. Zu diesen Zeitpunkt kann sich dann der Kondensator 104 schnell entladen, wonach der Schalter 126 wieder geöffnet wird. Zu diesem Zeitpunkt kann auch der Schalter 140 geschlossen werden, damit die Schaltung für eine neue Messung bereitsteht.

Die in den Figuren 1 bis 3 dargestellten Messgeräte sind in der Lage, die Amplituden der vom Lichtdetektor 102 ausgegebenen pulsartigen Stromsignale zu ermitteln und somit ein Amplitudenspektrum zu bestimmen, aus dem letztendlich Rückschlüsse auf Füllstand, Grenzstand, Dichte oder Durchsatz gezogen werden können. Da ausreichend Zeit für die Analyse eines einzelnen Pulses bereitsteht, können verhältnismäßig langsame Bauteile eingesetzt werden, wodurch Kosten und Energie gespart werden können.

Der Integrator der Fig. 1 könnte als passiver Filter beschrieben werden. Da der Schalter 140 im Grundzustand geschlossen ist und nach dem Aufladen des Kondensators 104 geöffnet wird, kann der gefilterte Spitzenwert des Strompulses, der vom Lichtdetektor 102 erzeugt wurde, so lange festgehalten werden, bis er durch die nachfolgende Elektronik 128 erfasst ist. Der Schalter 140 koppelt somit den Kondensator 104 von den vorgeschalteten Schaltungsbauteilen ab, sodass der Kondensator 104 viel langsamer entladen wird. Der Schalter 106 dient dazu, den Kondensator 104 nach der Auswertung durch die Steuerschaltung 128 zu entladen und für den nächsten Puls bereit zu machen. Die Zeitkonstante des Integrators 150 wird im Prinzip von sehr groß auf sehr klein umgeschaltet. Die Geschwindigkeit des Verstärkers 112 und der Auswerteschaltung 128 kann somit verhältnismäßig gering und deshalb maximal stromsparend gewählt werden.

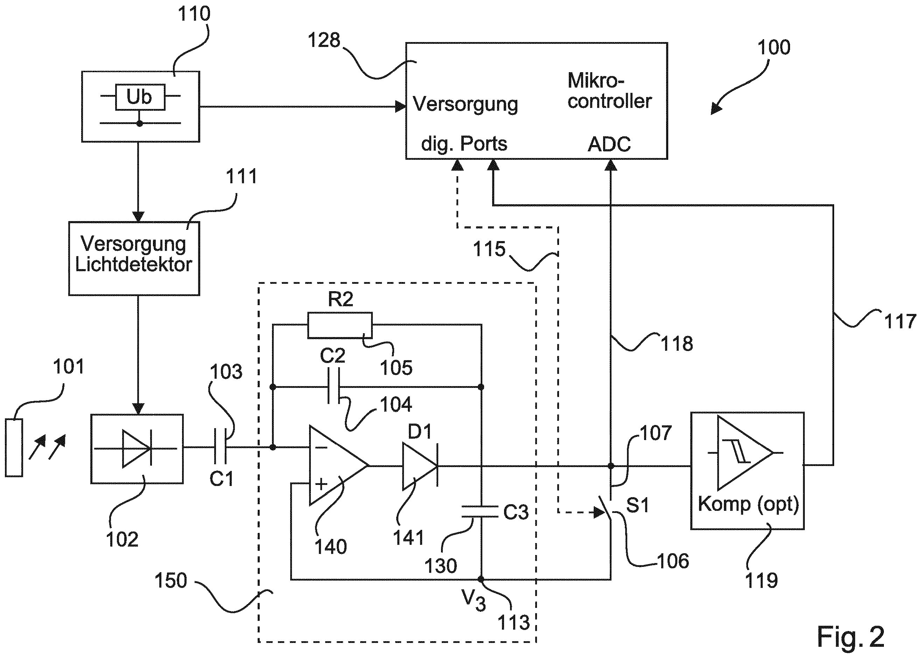

Fig. 2 zeigt ein weiteres Ausführungsbeispiel einer Schaltung für ein radiometrisches Messgerät 100. Im Vergleich zur Schaltung gemäß Fig. 1 weist in diesem Ausführungsbeispiel der Integrator 150 ein RC-Glied 105, 104 auf, welches als Gegenkopplungsglied für einen Operationsverstärker 140 dient. Der Operationsverstärker arbeitet als Transimpedanzverstärker. Weiterhin istan dessen Ausgang eine Diode 141 (alternativ kann auch ein Schalter vorgesehen sein) angeschlossen ist. Der Operationsverstärker mit der Diode ist damit auch als Spitzenwertgleichrichter geschaltet. Die Diode 141 soll verhindern, dass der zusätzliche Kondensator 130 über den Operationsverstärker 140 entladen wird.

Auch in diesem Ausführungsbeispiel ist ein Schalter 106 vorgesehen, der im geschlossenen Zustand zu einer schnellen Entladung des Kondensators 103 führt. Die Bezugsspannung ist in diesem Ausführungsbeispiel an den unteren Zweig 113 angelegt, der mit dem nichtinvertierenden Eingang des Operationsverstärkers, dem Kondensator 130 und dem Schalter 106 verbunden ist. Die andere Seite des Kondensators 103 ist mit dem Ausgang der Diode 141 und so mit dem Ausgang des Operationsverstärkers 140 verbunden; so auch die "andere Seite" des Schalters 106.

Der Ausgang der Diode 141 und somit der Kondensator 130 sind über die Leitung 118 mit dem Analog/Digital-Wandler der Steuerschaltung 128 verbunden, sodass diese die Spannung, die am Kondensator 130 anliegt, auswerten kann. Ist die Auswertung erfolgt, kann der Schalter 106 geschlossen werden, um den Kondensator möglichst schnell zu entladen. Um diesen Schaltvorgang zu triggern, ist die Steuerleitung 115 vorgesehen, die an die Steuerschaltung 128 angeschlossen ist.

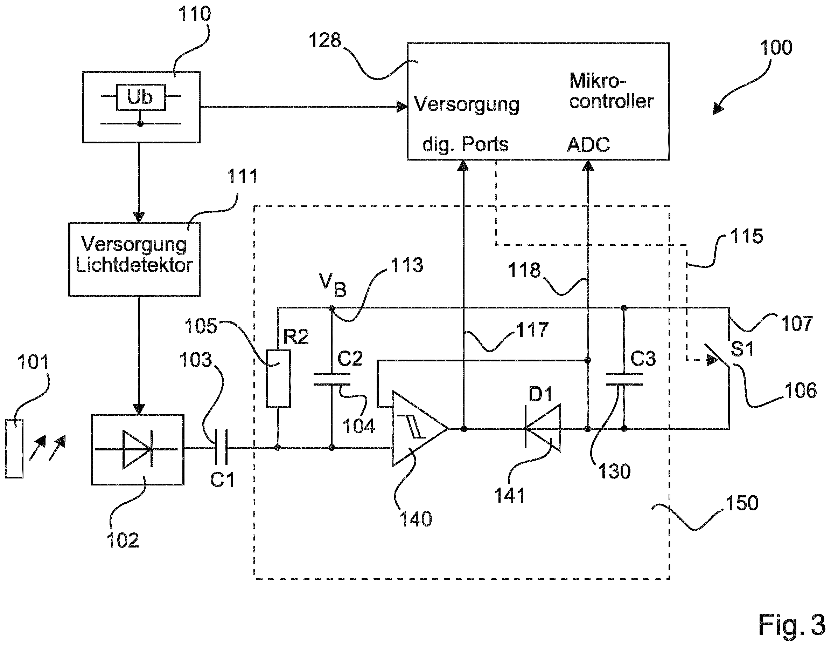

In diesem und auch in den anderen Ausführungsbeispielen kann eine Koppelkapazität 103 vorgesehen sein, die zwischen dem Lichtdetektor 102 und dem Integrator 150 angeordnet ist. Die Kapazität dieses Kondensators 103 kann beispielsweise im Bereich von 1 Nanofarad liegen, wohingegen die Kapazität des Filterkondensators 104 im Bereich von 10 Pikofarad liegen kann. Die Kapazität des Kondensators 103 in den Ausführungsbeispielen der Figuren 2 und 3 kann beispielsweise im Bereich zwischen 1 bis 10 Nanofarad liegen.

Optional kann ein Komparator 119 vorgesehen sein, der die am Kondensator 120 anliegende Spannung erfassen kann und ein entsprechendes Signal über die Steuerleitung 117 an die Steuerschaltung 128 abgeben kann. Der Komparator ist also in der Lage, einen Pulseingang in den Integrator 150 zu detektieren und ein entsprechendes Signal an die Steuerschaltung 128 abzugeben, woraufhin die Steuerschaltung 128 den integrierten Puls auswerten kann. Nach dieser Auswertung gibt die Steuerschaltung über den Signalpfad 115 ein Steuersignal an den Schalter 106, woraufhin dieser geschlossen wird, um den Kondensator 130 zu entladen.

Der Komparator 119 kann also die Spitzenwerte der Strompulse abtasten, um eine Pulsauswertung zu triggern. Alternativ ist es möglich, dass die Pulsauswertung zeitgesteuert erfolgt, beispielsweise einmal pro Millisekunde. Der Komparator 119 wird dann nicht benötigt.

Fig. 3 zeigt ein weiteres Ausfiihrungsbeispiel einer Schaltung eines radiometrischen Messgeräts 100. In diesem Ausführungsbeispiel wird die Funktion der Spitzenwertgleichrichtung von einem also Komparator geschalteten Operationsverstärker 140 übernommen. Auch hier ist ein RC-Glied 105, 104 vorgesehen. Der erste Eingang des Komparators 140 ist an den unteren Zweig des RC-Glieds angeschlossen, der über den Koppelkondensator 103 mit dem Ausgang des Lichtdctcktors 102 verbunden ist. Der andere Eingang des Komparators 140 ist über die Diode 141 mit seinem Ausgang verbunden. Die Diode 141 verhindert ein Entladen der Kapazität 130, wenn der Komparator 140 in den Grundzustand schaltet. Dies ist dann der Fall, wenn die Spannung an der Kapazität 104 kleiner als die Spannung an der Kapazität 130 ist.

Der Ausgang des Komparators 140 ist an einen digitalen Port der Steuerschaltung 128 angeschlossen (siehe Leitung 117), um der Steuerschaltung mitzuteilen, dass ein entsprechender Puls eingegangen ist. Der Schalter 106 ist zu diesem Zeitpunkt geöffnet, um ein frühzeitiges Entladen des Kondensators 130 zu verhindern. Jetzt kann die Steuerschaltung 128 über die Leitung 118 das Signal der Kapazität auswerten, woraufhin über die Leitung 115 ein Steuersignal an den Schalter 106 gegeben wird, der sich daraufhin schließt.

Die Bezugsspannung V_{B} ist an den oberen Zweig 113 des RC-Glieds 105, 104 und auch des Kondensators 130 angelegt. Der Schalter 106 ist parallel zum Kondensator 130 angeordnet, wie auch im Ausführungsbeispiel der Fig. 2.

In dem in Fig. 3 dargestellten Ausführungsbeispiel wird die Spannung des Filterkondensators 104 des RC-Glieds auf den Kondensator 130 umgesetzt, dessen Kapazität so groß ist, dass die Ladung/Entladung während der Analog/Digital-Wandlung keine Verfälschung der zu ermittelnden Pulsamplitude hervorruft. Der Kondensator 130 wird hierbei so lange geladen, bis die Spannung gleich der Spannung am Filterkondensator 104 ist. Die Entladung des Kondensators 130 erfolgt über den Schalter 106 nach der erfolgten Signalverarbeitung.

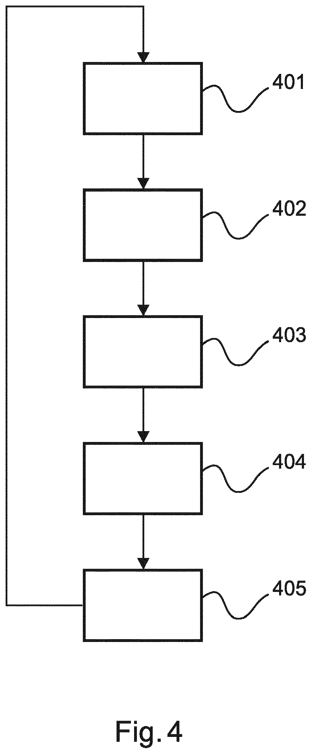

Fig. 4 zeigt ein Flussdiagramm eines Verfahrens gemäß einem Ausführungsbeispiel der Erfindung. In Schritt 401 wird radioaktive Strahlung in ein pulsartiges elektrisches Stromsignal umgewandelt. Spätestens zu diesem Zeitpunkt wird dafür Sorge getragen, dass die Entladung eines Bauteils eines Integrators verzögert ist. In Schritt 402 wird das Stromsignal integriert, was zum Aufladen des Bauteils führt. In Schritt 403 wird das integrierte Stromsignal von einer Steuerschaltung analysiert. Während diesem Zeitraum ist die Entladung des Bauteils des Integrators verzögert. Durch Analyse einer Vielzahl solcher Stromsignale kann auf einen Füllstand, einen Grenzstand, eine Dichte oder einen Durchsatz rückgeschlossen werden. In Schritt 404 wird ein Schalter geschlossen, nachdem die Analyse des Stromsignals abgeschlossen ist, um die Entladung des Integrators zu beschleunigen.

Daraufhin wird der Schalter wieder geöffnet (Schritt 405) und die Schaltung steht für eine weitere Messung bereit.

Ergänzend sei daraufhingewiesen, dass "umfassend" und "aufweisend" keine anderen Elemente oder Schritte ausschließt und die unbestimmten Artikel "eine" oder "ein" keine Vielzahl ausschließen. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Radiometrisches Füllstandmessgerät, aufweisend:
eine Detektoranordnung (101, 102), ausgeführt zum Umwandeln von radioaktiver Strahlung in ein pulsartiges elektrisches Stromsignal;
einen Integrator (150), ausgeführt zum Integrieren des elektrischen Stromsignals, was zu einem Aufladen eines Bauteils (104, 130) des Integrators führt;
wobei das Füllstandmessgerät ausgeführt ist zur Bestimmung eines Amplitudenspektrums, und zur Bestimmung eines Füllstands oder eines Grenzstands;
**gekennzeichnet durch**
eine Verzögerungsschaltung (106, 107) zum wahlweisen Verzögern und Beschleunigen einer Entladung des Bauteils des Integrators;
eine Steuerschaltung (128), ausgeführt zur Analyse des integrierten elektrischen Stromsignals, während die Entladung des Bauteils des Integrators verzögert ist.

2. Radiometrisches Durchsatzmessgerät, aufweisend:
eine Detektoranordnung (101, 102), ausgeführt zum Umwandeln von radioaktiver Strahlung in ein pulsartiges elektrisches Stromsignal;
einen Integrator (150), ausgeführt zum Integrieren des elektrischen Stromsignals, was zu einem Aufladen eines Bauteils (104, 130) des Integrators führt;
wobei das Durchsatzmessgerät ausgeführt ist zur Bestimmung eines Amplitudenspektrums, und zur Bestimmung eines Durchsatzes;
**gekennzeichnet durch**
eine Verzögerungsschaltung (106, 107) zum wahlweisen Verzögern und Beschleunigen einer Entladung des Bauteils des Integrators;
eine Steuerschaltung (128), ausgeführt zur Analyse des integrierten elektrischen Stromsignals, während die Entladung des Bauteils des Integrators verzögert ist.

3. Radiometrisches Messgerät nach einem der vorhergehenden Ansprüche, wobei der Integrator (150) aus einem ersten Kondensator (104) besteht.

4. Radiometrisches Messgerät nach einem der vorhergehenden Ansprüche,
wobei die Verzögerungsschaltung eine Bypassleitung (107) mit einem ersten Schalter (106) aufweist;
wobei die Steuerschaltung zur Analyse des elektrischen Stromsignals und zum darauffolgenden Schließen des ersten Schalters ausgeführt ist, um das Bauteil (104, 130) des Integrators (150) zügig zu entladen.

5. Radiometrisches Messgerät nach einem der vorhergehenden Ansprüche, aufweisend:
einen zweiten Schalter (140), der vor dem Integrator (150) angeordnet ist und zum Trennen des Lichtdetektors (102) vom Integrator ausgeführt ist.

6. Radiometrisches Messgerät nach einem der vorhergehenden Ansprüche,
wobei der Integrator (150) einen ersten Kondensator (104), einen dazu parallel geschalteten Widerstand (105), eine Verstärkerschaltung (140, 141) und einen an den Ausgang der Verstärkerschaltung angeschlossenen zweiten Kondensator (130) aufweist.

7. Radiometrisches Messgerät nach Anspruch 6, wobei die Verstärkerschaltung (140, 141) einen Operationsverstärker (140) aufweist, der als Spitzenwertgleichrichter geschaltet ist.

8. Radiometrisches Messgerät nach Anspruch 6, wobei die Verstärkerschaltung (140, 141) einen Operationsverstärker (140) aufweist, der als Komparator geschaltet ist.

9. Radiometrisches Messgerät nach einem der vorhergehenden Ansprüche,
wobei die Detektoranordnung ein Geiger-Müller Zählrohr oder einen Szintillator (101) und einen Photomultiplier (102) aufweist.

10. Radiometrisches Messgerät nach einem der Ansprüche 1 bis 9, wobei die Detektoranordnung einen Szintillator (101) und einen Siliziumphotomultiplier (102) aufweist.

11. Radiometrisches Messgerät nach einem der vorhergehenden Ansprüche,
ausgeführt zum Durchführen der Integration der pulsartigen elektrischen Stromsignale über einen festen oder einstellbaren Zeitraum und zum Heranziehen der während dieses Zeitraums im Integrator (150) gespeicherten Ladung zur Bildung eines Messwerts.

12. Radiometrisches Messgerät nach Anspruch 11,
wobei Strompulse so lange integriert werden, bis an dem Integrator (150) ein fester oder einstellbarer Vergleichswert überschritten ist und die ermittelte Dauer dieses Vorgangs zur Bildung eines Messwerts herangezogen wird.

13. Radiometrisches Messgerät nach einem der vorhergehenden Ansprüche,
ausgeführt zum Anschluss an eine 4-20mA Zweileiterschleife, über welche das Messgerät mit der zu seinem Betrieb erforderlichen elektrischen Energie versorgt wird.

14. Verfahren zum Messen eines Füllstands, eines Grenzstands oder eines Durchsatzes mit einem radiometrischen Messgerät nach Anspruch 1 oder 2, aufweisend die Schritte:
Umwandeln von radioaktiver Strahlung in ein pulsartiges elektrisches Stromsignal;
Verzögern einer Entladung eines Bauteils (104, 130) eines Integrators;
Integrieren des Stromsignals, was zu einem Aufladen des Bauteils des Integrators führt;
Analyse des integrierten Stromsignals, während die Entladung des Bauteils des Integrators verzögert ist, und Bestimmen eines Amplitudenspektrums, um daraus einen Füllstand, einen Grenzstand, eine Dichte oder einen Durchsatz zu bestimmen;
Schließen eines Schalters, wenn das integrierte Stromsignal analysiert worden ist, um die Entladung des Integrators zu beschleunigen.

15. Programmelement, das, wenn es auf einer Steuerschaltung (128) eines radiometrischen Messgeräts nach Anspruch 1 oder 2 ausgeführt wird, das Messgerät anleitet, die folgenden Schritte durchzuführen:
Umwandeln von radioaktiver Strahlung in ein pulsartiges elektrisches Stromsignal;
Verzögern einer Entladung eines Bauteils (104, 130) eines Integrators;
Integrieren des elektrischen Stromsignals, was zu einem Aufladen des Bauteils des Integrators führt;
Analyse des integrierten Stromsignals, während die Entladung des Bauteils des Integrators verzögert ist, und Bestimmen eines Amplitudenspektrums, um daraus einen Füllstand, einen Grenzstand, eine Dichte oder einen Durchsatz zu bestimmen;
Schließen eines Schalters, wenn das integrierte Stromsignal analysiert worden ist, um die Entladung des Integrators zu beschleunigen.

16. Computerlesbares Medium, auf dem ein Programmelement nach Anspruch 15 gespeichert ist.

## Claims

1. Radiometric fill level measuring device, comprising:
a detector arrangement (101, 102), configured to convert radioactive radiation into a pulsed electrical current signal;
an integrator (150), configured to integrate the electric current signal, resulting in charging a component (104, 130) of the integrator;
wherein the fill level measuring device is configured to determine an amplitude spectrum, and to determine a fill level or a limit level;
**characterized by**
a delay circuit (106, 107) for selectively delaying and accelerating a discharge of the component of the integrator;
a control circuit (128), configured to analyze the integrated electrical current signal while the discharge of the component of the integrator is delayed

2. Radiometric flow measuring device, comprising:
a detector arrangement (101, 102), configured to convert radioactive radiation into a pulsed electrical current signal;
an integrator (150), configured to integrate the electric current signal, resulting in charging a component (104, 130) of the integrator;
wherein the flow measuring device is configured to determine an amplitude spectrum, and to determine a flow rate;
**characterized by**
a delay circuit (106, 107) for selectively delaying and accelerating a discharge of the component of the integrator;
a control circuit (128), configured to analyze the integrated electrical current signal while the discharge of the component of the integrator is delayed

3. Radiometric measuring device according to any of the preceding claims, wherein the integrator (150) consists of a first capacitor (104).

4. Radiometric measuring device according to any of the preceding claims,
wherein the delay circuit comprises a bypass line (107) having a first switch (106);
wherein the control circuit is configured to analyze the electrical current signal and then close the first switch, in order to rapidly discharge the component (104, 130) of the integrator (150).

5. Radiometric measuring device according to any of the foregoing claims, comprising:
a second switch (140) that is arranged in front of the integrator (150) and configured to disconnect the light detector (102) from the integrator.

6. Radiometric measuring device according to any of the preceding claims,
wherein the integrator (150) comprises a first capacitor (104), a resistor (105) connected in parallel therewith, an amplifier circuit (140, 141) and a second capacitor (130) connected to the output of the amplifier circuit.

7. Radiometric measuring device according to claim 6,
wherein the amplifier circuit (140, 141) comprises an operational amplifier (140) connected as a peak value rectifier.

8. Radiometric measuring device according to claim 6,
wherein the amplifier circuit (140, 141) comprises an operational amplifier (140) connected as a comparator.

9. Radiometric measuring device according to any of the preceding claims,
wherein the detector arrangement comprises a Geiger-Müller counter or a scintillator (101) and a photomultiplier (102).

10. Radiometric measuring device according to any of claims 1 to 9,
wherein the detector arrangement comprises a scintillator (101) and a silicon photomultiplier (102).

11. Radiometric measuring device according to any of the preceding claims,
configured to carry out the integration of the pulsed electrical current signals over a fixed or adjustable period of time and to use the charge stored during this period of time in the integrator (150) to form a measuring value.

12. Radiometric measuring device according to claim 11,
wherein current pulses are integrated until a fixed or adjustable comparing value is exceeded at the integrator (150) and the determined duration of this process is used to form a measuring value.

13. Radiometric measuring device according to any of the preceding claims,
configured for connecting to a 4-20mA two-wire loop, which supplies the measuring device with the electrical energy required for its operation.

14. Method for measuring a fill level, a limit level or a flow rate by means of a radiometric measuring device according to claim 1 or 2, comprising the steps:
converting radioactive radiation into a pulsed electrical current signal;
delaying a discharge of a component (104, 130) of an integrator;
integrating the current signal, resulting in charging the component of the integrator;
analyzing the integrated current signal while the discharge of the component of the integrator is delayed and determining an amplitude spectrum, in order to determine a fill level, a limit level, a density or a flow rate;
closing a switch when the integrated current signal has been analyzed to accelerate the discharge of the integrator.

15. Program element which, when executed on a control circuit (128) of a radiometric measuring device according to claim 1 or 2, instructs the measuring device to perform the following steps:
converting radioactive radiation into a pulsed electrical current signal;
delaying a discharge of a component (104, 130) of an integrator;
integrating the electrical current signal, resulting in charging the component of the integrator;
analyzing the integrated current signal while the discharge of the component of the integrator is delayed and determining an amplitude spectrum, in order to determine a fill level, limit level, a density or a flow rate;
closing a switch when the integrated current signal has been analyzed to accelerate the discharge of the integrator.

16. Computer-readable medium on which a program element according to claim 15 is stored.

## Revendications

1. Appareil de mesure de niveau de remplissage radiométrique, présentant :
un agencement de détection (101, 102) conçu pour convertir un rayonnement radioactif en un signal de courant électrique puisé ;
un intégrateur (150) conçu pour intégrer le signal de courant électrique, ce qui entraîne la charge d'un composant (104, 130) de l'intégrateur ;
dans lequel l'appareil de mesure de niveau de remplissage est conçu pour déterminer un spectre d'amplitude et pour déterminer un niveau de remplissage ou un niveau limite ;
**caractérisé par**
un circuit de retard (106, 107) pour, sélectivement, retarder et accélérer une décharge du composant de l'intégrateur ;
un circuit de commande (128) conçu pour analyser le signal de courant électrique intégré pendant que la décharge du composant de l'intégrateur est retardée.

2. Appareil de mesure de débit radiométrique, présentant :
un agencement de détection (101, 102) conçu pour convertir un rayonnement radioactif en un signal de courant électrique puisé ;
un intégrateur (150) conçu pour intégrer le signal de courant électrique, ce qui entraîne la charge d'un composant (104, 130) de l'intégrateur ;
dans lequel l'appareil de mesure de débit est conçu pour déterminer un spectre d'amplitude et pour déterminer un débit ;
**caractérisé par**
un circuit de retard (106, 107) pour, sélectivement, retarder et accélérer une décharge du composant de l'intégrateur ;
un circuit de commande (128) conçu pour analyser le signal de courant électrique intégré pendant que la décharge du composant de l'intégrateur est retardée.

3. Appareil de mesure radiométrique selon l'une des revendications précédentes, dans lequel l'intégrateur (150) est constitué d'un premier condensateur (104).

4. Appareil de mesure radiométrique selon l'une des revendications précédentes,
dans lequel le circuit de retard présente une ligne de dérivation (107) avec un premier commutateur (106) ;
dans lequel le circuit de commande est conçu pour analyser le signal de courant électrique et ensuite fermer le premier commutateur pour décharger rapidement le composant (104, 130) de l'intégrateur (150).

5. Appareil de mesure radiométrique selon l'une des revendications précédentes, présentant :
un deuxième commutateur (140) qui est disposé avant l'intégrateur (150) et est conçu pour séparer le détecteur de lumière (102) de l'intégrateur.

6. Appareil de mesure radiométrique selon l'une des revendications précédentes,
dans lequel l'intégrateur (150) présente un premier condensateur (104), une résistance (105) connectée en parallèle avec celui-ci, un circuit amplificateur (140, 141) et un deuxième condensateur (130) connecté à la sortie du circuit amplificateur.

7. Appareil de mesure radiométrique selon la revendication 6,
dans lequel le circuit amplificateur (140, 141) présente un amplificateur opérationnel (140) qui est monté comme un redresseur de crêtes.

8. Appareil de mesure radiométrique selon la revendication 6,
dans lequel le circuit amplificateur (140, 141) présente un amplificateur opérationnel (140) qui est monté comme un comparateur.

9. Appareil de mesure radiométrique selon l'une des revendications précédentes,
dans lequel l'agencement de détection présente un tube compteur Geiger-Müller ou un scintillateur (101) et un photomultiplicateur (102).

10. Appareil de mesure radiométrique selon l'une des revendications 1 à 9,
dans lequel l'agencement de détection présente un scintillateur (101) et un photomultiplicateur au silicium (102) .

11. Appareil de mesure radiométrique selon l'une des revendications précédentes,
conçu pour effectuer l'intégration des signaux de courant électrique pulsés sur un laps de temps fixe ou réglable et pour utiliser la charge stockée pendant ce laps de temps dans l'intégrateur (150) pour former une valeur de mesure.

12. Appareil de mesure radiométrique selon la revendication 11,
dans lequel des impulsions de courant sont intégrées jusqu'à ce qu'une valeur de comparaison fixe ou réglable soit dépassée à l'intégrateur (150) et la durée déterminée de ce processus est utilisée pour former une valeur de mesure.

13. Appareil de mesure radiométrique selon l'une des revendications précédentes,
conçu pour être connecté à une boucle à deux fils de 4-20 mA qui fournit à l'appareil de mesure l'énergie électrique nécessaire à son fonctionnement.

14. Procédé de mesure d'un niveau de remplissage, d'un niveau limite ou d'un débit avec un appareil de mesure radiométrique selon la revendication 1 ou 2, présentant les étapes consistant à :
convertir un rayonnement radioactif en un signal de courant électrique puisé ;
retarder une décharge d'un composant (104, 130) d'un intégrateur ;
intégrer le signal de courant, ce qui entraîne une charge du composant de l'intégrateur ;
analyser le signal de courant intégré pendant que la décharge du composant de l'intégrateur est retardée et déterminer un spectre d'amplitude pour déterminer à partir de celui-ci un niveau de remplissage, un niveau limite, une densité ou un débit ;
fermer un commutateur lorsque le signal de courant intégré a été analysé, pour accélérer la décharge de l'intégrateur.

15. Élément de programme qui, lorsqu'il est exécuté sur un circuit de commande (128) d'un appareil de mesure radiométrique selon la revendication 1 ou 2, donne à l'appareil de mesure l'instruction d'effectuer les étapes suivantes :
convertir un rayonnement radioactif en un signal de courant électrique puisé ;
retarder une décharge d'un composant (104, 130) d'un intégrateur ;
intégrer le signal de courant électrique, ce qui entraîne une charge du composant de l'intégrateur ;
analyser le signal de courant intégré pendant que la décharge du composant de l'intégrateur est retardée et déterminer un spectre d'amplitude pour déterminer à partir de celui-ci un niveau de remplissage, un niveau limite, une densité ou un débit ;
fermer un commutateur lorsque le signal de courant intégré a été analysé, pour accélérer la décharge de l'intégrateur.

16. Support lisible par ordinateur sur lequel est stocké un élément de programme selon la revendication 15.
